(19) Europäisches Patentamt
European Patent Office
Office européen des brevets

(11) **EP 3 729 206 B1**

(12) **FASCICULE DE BREVET EUROPEEN**

(45) Date de publication et mention
de la délivrance du brevet:
**31.08.2022 Bulletin 2022/35**

(21) Numéro de dépôt: **18842442.8**

(22) Date de dépôt: **20.12.2018**

(51) Classification Internationale des Brevets (IPC):
**G05B 11/42** *(2006.01)*

(52) Classification Coopérative des Brevets (CPC):
**G05B 11/42**

(86) Numéro de dépôt international:
**PCT/FR2018/053464**

(87) Numéro de publication internationale:
**WO 2019/122755 (27.06.2019 Gazette 2019/26)**

(54) **PROCEDE DE REGLAGE D'UN CORRECTEUR AVEC PONDERATION DE CONSIGNE**

VERFAHREN UND VORRICHTUNG ZUR REGELUNG EINES REGLERS MIT SOLLGEWICHTUNG

METHOF OF CLOSED-LOOP CONTROLLING A CONTROLLER WITH SETPOINT WEIGHTING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2017 FR 1762660**

(43) Date de publication de la demande:
**28.10.2020 Bulletin 2020/44**

(73) Titulaire: **SAFRAN AIRCRAFT ENGINES
75015 Paris (FR)**

(72) Inventeurs:
• **DENEUVE, Sébastien Jean Fernand
77550 Moissy-Cramayel (FR)**
• **LE BRUN, Christophe Marc Alexandre
77550 Moissy-Cramayel (FR)**

(74) Mandataire: **Regimbeau
20, rue de Chazelles
75847 Paris Cedex 17 (FR)**

(56) Documents cités:
**DE-A1- 3 506 097    DE-A1- 3 708 266**

• **V. RAJINIKANTH ET AL: "Setpoint weighted PID controller tuning for unstable system using heuristic algorithm", ARCHIVES OF CONTROL SCIENCES, vol. 22, no. 4, 1 décembre 2012 (2012-12-01), pages 481-505, XP055514698, PL ISSN: 1230-2384, DOI: 10.2478/v10170-011-0037-8**

## Description

### DOMAINE TECHNIQUE GÉNÉRAL ET ART ANTÉRIEUR

L'invention concerne le domaine général des systèmes asservis.

Plus particulièrement, elle concerne le réglage de correcteurs avec pondération de commande dans les systèmes de contrôle-commande.

Elle trouve application dans tous types de systèmes asservis, notamment dans les systèmes de contrôle-commande des actionneurs d'une turbomachine, par exemple les actionneurs asservissant des paramètres tels que l'angle de calage des aubes, le débit de carburant ou la position d'organes à géométrie variable.

Ces actionneurs comportent classiquement un ensemble servovalve-vérin, dont le comportement est classiquement modélisé dans le domaine de l'asservissement par un système linéaire du deuxième ordre avec un intégrateur.

Ce type de fonctionnement est traduit par l'équation ci-dessous :

$$G_{sys}(s) = \frac{1}{s}\left(\frac{as^2 + bs + c}{\alpha s^2 + \beta s + \gamma}\right)$$

Le comportement des boucles de commande est généralement spécifié par un cahier des charges du système de commande, notamment pour des critères de temps de réponse, de dépassement, de stabilité ou d'erreur statique et de traînage.

Il est également nécessaire d'assurer la robustesse de la commande aux perturbations (par exemple un bruit de mesure ou un effort résistant survenu au cours du suivi d'une consigne) et aux incertitudes de modélisation.

En dehors des objectifs de performances, les lois de commande doivent être facilement ajustables et d'une complexité raisonnable. En effet, les lois de commande sont susceptibles d'être recalées sur banc d'essai si les performances obtenues sur le système réel ne respectent pas le cahier des charges. Ces différences de comportement peuvent s'expliquer par une mauvaise modélisation Gsys du système. On peut alors modifier le réglage en adaptant Gsys pour qu'il soit davantage représentatif de la réalité.

Enfin des limiteurs de gradient sont généralement appliqués aux consignes des boucles locales associées à la régulation du calage pour éviter d'avoir des dynamiques trop importantes (susceptibles d'engendrer des surcouples dans les arbres des hélices). Ces limiteurs font que les consignes les plus rapides envoyées aux boucles locales auront la forme de rampes avec un gradient maximal connu. Régler les correcteurs en connaissant l'erreur que l'on aura pour ces consignes en rampes est alors un enjeu crucial.

Etant données les exigences sévères pour ces boucles locales, un correcteur proportionnel intégral n'est pas toujours adapté. Il est alors nécessaire de faire appel à des structures de correcteur plus évoluées qui disposent d'un nombre de degrés de liberté plus important pour répondre aux besoins.

Cependant, le recours classique à une composante dérivée dans la régulation peut engendrer des effets non désirés notamment en cas de bruit sur les acquisitions ou de consignes variant brutalement.

Une solution permettant d'avoir un troisième degré de liberté dans le réglage du correcteur sans ajouter de composante dérivée est d'utiliser un correcteur de type PI avec pondération de la consigne.

Ce type de correcteur permet de modifier la dynamique de poursuite du réglage PI tout en conservant ses propriétés de stabilité et de rejet de perturbations. Ceci peut notamment permettre de conserver la rapidité du PI initial tout en réduisant le dépassement.

Cependant, contrairement au correcteur PI où de nombreuses méthodes de réglage existent, le réglage d'un correcteur PI avec pondération de la consigne se fait principalement de manière itérative sur les gains proportionnel $K_P$, intégral $K_I$ et le coefficient de pondération de consigne $\beta$. Cette méthode heuristique peut alors s'avérer fastidieuse.

Le document DE 35 06 097 A1 divulgue un correcteur avec pondération de consigne.

### PRÉSENTATION GÉNÉRALE DE L'INVENTION

Un premier but de l'invention est de pallier aux lacunes de l'état de l'art existant en fournissant une méthode de réglage automatique de correcteur de type proportionnel intégral avec pondération de la consigne.

Un autre but de l'invention est de proposer une méthode de réglage simple.

Un autre but de l'invention est de proposer une structure de régulateur simple.

Un autre but de l'invention est de minimiser le dépassement sans dégrader le temps de réponse.

Un autre but de l'invention est d'améliorer le temps de réponse et le dépassement sans dégrader la stabilité et la robustesse notamment le rejet de perturbation.

Un autre but de l'invention est de réduire l'impact du bruit de mesure.

Un autre but de l'invention est d'optimiser le compromis dépassement/erreur de traînage.

Il est classiquement entendu par erreur de traînage la différence entre la consigne injectée dans un système piloté et la réponse de ce système, lorsque la consigne est de type rampe. Une consigne de type rampe est classiquement une fonction linéaire.

Un autre but de l'invention est d'estimer et de définir l'erreur de traînage attendue à partir d'un réglage du correcteur.

Pour cela, l'invention propose un procédé de réglage d'un correcteur de type proportionnel intégral dans un dispositif de contrôle commande d'un système asservi, notamment d'un système servovalve-vérin, le correcteur comportant un coefficient de pondération de consigne, un gain proportionnel et un gain intégral,

le procédé de réglage comportant les étapes successives de :

- Réglage du coefficient de pondération de consigne à une valeur unitaire,
- Réglage du gain proportionnel et du gain intégral du correcteur répondant à au moins un critère de performance prédéfini,
- Définition d'une erreur de trainage caractéristique permettant de répondre aux contraintes de performances du système asservi, et
- Réglage du coefficient de pondération de consigne à une valeur de coefficient de pondération de consigne en fonction de l'erreur de traînage caractéristique et du gain proportionnel et du gain intégral préalablement réglés.

L'invention peut être optionnellement mais avantageusement complétée par les caractéristiques suivantes, prises seules ou en combinaison :

- l'étape de réglage du gain proportionnel et du gain intégral du correcteur comprenant en outre les étapes suivantes :

  - Détermination et réglage des gains proportionnel et intégral à des valeurs initiales,
  - Ajustement par itération des gains proportionnel et intégral, de manière à optimiser au moins un critère de performance prédéfini ;

- l'étape de détermination des valeurs initiales des gains proportionnel et intégral est réalisée par une méthode empirique de Ziegler-Nichols ou par une méthode empirique de Takahashi ;

- le procédé comprend en outre une étape de détermination d'une marge de sécurité, et dans lequel l'étape de réglage du coefficient de pondération de consigne est réalisée en fonction de l'erreur théorique du dispositif de contrôle commande et de la marge de sécurité ;

- la marge de sécurité est déterminée en fonction de l'écart de comportement entre le système réel et son modèle linéarisé ;

- le correcteur ne comporte pas de composante dérivée ;

- le procédé est réalisé de manière automatique au moyen d'un module de réglage comportant une ou plusieurs unités de mémoire, dans lesquelles sont stockées des consignes permettant l'exécution du procédé de réglage automatique, les consignes étant exécutées au moyen d'au moins un processeur.

Selon un deuxième aspect, l'invention propose également un dispositif de contrôle commande d'un système asservi, notamment d'un système servovalve-vérin, le dispositif de contrôle commande comportant une consigne injectée dans un correcteur, le signal de sortie du correcteur étant injecté dans le système asservi, le système asservi produisant une réponse, la réponse étant également injectée dans le correcteur, dans lequel le correcteur est un correcteur de type proportionnel intégral comprenant un pondérateur de consigne, le pondérateur comportant un coefficient de pondération de consigne, le coefficient de pondération de consigne du correcteur étant défini au moyen d'un procédé de réglage selon l'invention.

Optionnellement mais avantageusement, dans un tel dispositif le correcteur est configuré pour générer une commande correspondant à la somme de :

- Une erreur intégrée et modifiée par un gain intégral,
- La différence entre une consigne pondérée par le coefficient de pondération de consigne et la réponse du système asservi, cette différence étant modifiée par un gain proportionnel,

dans lequel le gain intégral, le gain proportionnel et le coefficient de pondération de consigne sont des paramètres réglables du correcteur.

## PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :

- la figure 1 est un schéma d'une chaîne d'asservissement conforme à l'invention ;
- la figure 2 est un schéma détaillant un procédé de réglage automatique d'un correcteur conforme à l'invention ;
- la figure 3 représente un module de réglage permettant de réaliser un procédé conforme à l'invention ;

## DESCRIPTION D'UN OU PLUSIEURS MODES DE MISE EN ŒUVRE ET DE RÉALISATION

*Généralités :*

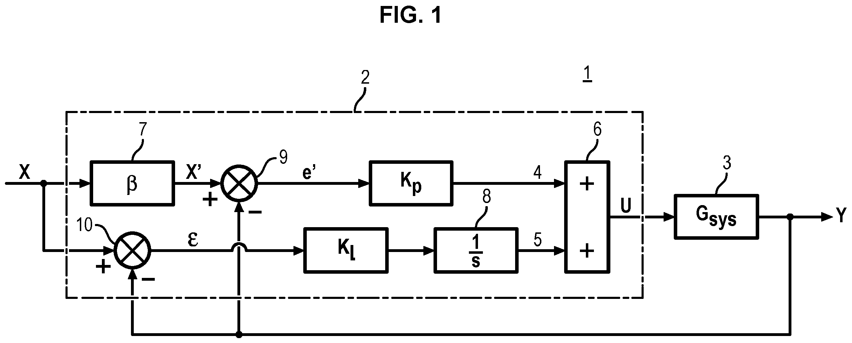

En référence à la figure 1, une chaîne de contrôle commande 1 comporte un correcteur 2 et un système asservi 3.

Dans un mode de réalisation préférentiel, le système asservi 3 comporte un intégrateur.

Dans le mode de réalisation représenté, le correcteur 2 est du type proportionnel intégral à pondération de consigne.

Une consigne X est injectée en entrée du correcteur 2, qui transforme la consigne X en commande U, la commande U étant injectée dans le système asservi 3.

Le système asservi 3 réagit en fonction de la commande U reçue, la réponse Y du système asservi étant mesurée et retournée au correcteur 2.

Plus précisément, le correcteur 2 réalise une action proportionnelle 4 et une action intégrale 5 en parallèle, qui sont injectées dans un sommateur 6.

Le sommateur 6 génère ainsi la commande U, qui est injectée dans le système asservi 3.

La consigne X et la réponse Y sont toutes deux injectées sur chacune des chaînes d'action proportionnelle 4 et intégrale 5.

L'action proportionnelle 4 reçoit en entrée la consigne X, qui est injectée dans un pondérateur 7 de manière à générer une consigne pondérée X'.

Le pondérateur 7 applique un gain, ou un coefficient de pondération de consigne $\beta$, à la consigne X.

La consigne pondérée X' et la réponse Y sont injectées dans un soustracteur 9, générant une erreur pondérée e', c'est-à-dire la différence entre la consigne pondérée X' et la réponse Y.

L'erreur pondérée e' est injectée dans un gain proportionnel $K_P$, puis dans le sommateur 6.

L'action intégrale 5 reçoit en entrée la consigne X, qui est injectée dans un soustracteur 10 avec la réponse Y, générant une erreur $\varepsilon$ correspondant à la différence entre la consigne X et la réponse Y.

Dans ce cas précis, l'erreur $\varepsilon$ est une erreur de traînage $\varepsilon_T$, la consigne X étant de type rampe.

L'erreur $\varepsilon$ est ensuite injectée dans un gain intégral $K_I$, puis dans un bloc intégrateur 8. La sortie de l'intégrateur 8 est injectée dans le sommateur 6.

Il est possible dans d'autres modes de réalisation que le pondérateur 7 soit situé sur l'action intégrale 5, ou en amont du correcteur, ou encore que chacune des actions proportionnelle 4 et intégrale 5 comporte un pondérateur 7 présentant chacun un coefficient de pondération de consigne $\beta$, ces coefficients étant mutuellement différents.

*Réglage du correcteur :*

De manière bien connue, le dimensionnement des gains proportionnel $K_P$ et intégral $K_I$ a une incidence sur la stabilité, le temps de réponse et la robustesse de la chaîne de contrôle 1.

Le réglage des degrés de libertés du correcteur 2 permet d'optimiser les critères de stabilité, de temps de réponse et de robustesse du système, ainsi que de minimiser le dépassement et l'erreur de traînage.

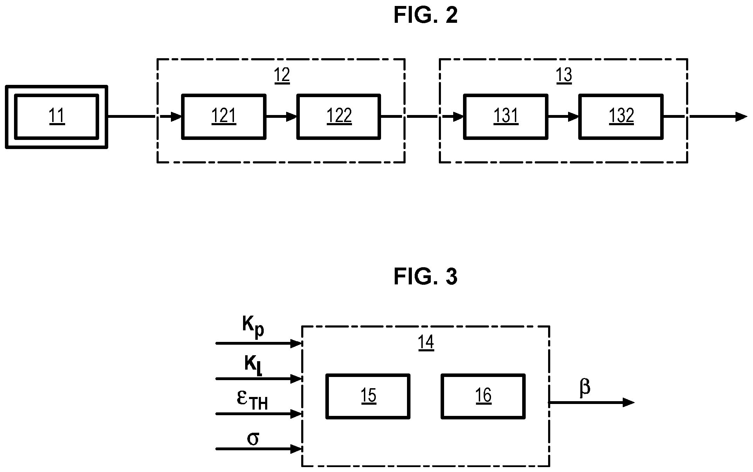

Un procédé de réglage automatique de ces paramètres comporte une pluralité d'étapes réalisées séquentiellement. Ce procédé est illustré en figure 2.

Une étape d'assignation 11 est premièrement réalisée, au cours de laquelle le coefficient de pondération de consigne $\beta$ est fixé à une valeur unitaire. De cette manière, le correcteur a un comportement de correcteur proportionnel intégral classique.

Une étape d'optimisation 12 est ensuite réalisée, au cours de laquelle un réglage du correcteur 2 est réalisé de manière à optimiser au moins un critère de performance, pouvant être choisi parmi par exemple la robustesse, le temps de réponse, le dépassement, ou tout autre critère ou combinaison de critères permettant de quantifier les performances et le comportement d'un système asservi.

Au cours d'une étape de détermination 121, des valeurs initiales sont déterminées et assignées au gain proportionnel $K_P$ et au gain intégral $K_I$.

Il s'agit d'un premier réglage du correcteur 2, réalisable par une méthode classique de réglage comme par exemple une méthode empirique de Ziegler Nichols ou de Takahashi, comme décrit ci-dessous.

Au cours de l'étape de détermination 121 suivant la méthode de Takahashi, la marge de gain du système à réguler est estimée en augmentant le gain jusqu'à avoir un système oscillant auto-entretenu.

Des valeurs initiales des gains proportionnel et intégral sont ensuite définies en fonction des valeurs de marge de gain données par la méthode de Takahashi (tableau de correspondance disponible dans la littérature).

Toute autre méthode classique de réglage de correcteur peut être utilisée pour réaliser cette étape, le choix d'une autre méthode pouvant entraîner une détermination des valeurs initiales de gains proportionnel et intégral en fonction d'un autre critère que la marge de gain, comme par exemple le dépassement ou le temps de réponse.

Les valeurs initiales du gain proportionnel $K_P$ et du gain intégral $K_I$ sont ensuite affinées lors d'une étape d'ajustement 122.

Lors de l'étape d'ajustement 122, les valeurs de gain proportionnel $K_P$ et de gain intégral $K_I$ sont affinées par itération, de manière à respecter les exigences de stabilité, de temps de réponse et de robustesse qui sont stipulées par le cahier des charges de la chaîne de contrôle commande 1. On augmente ou diminue la valeur des gains jusqu'à obtenir un réglage qui donne des résultats satisfaisants en simulation.

Une fois les valeurs optimales de gain proportionnel $K_P$ et du gain intégral $K_I$ obtenues, elles sont fixées, et une étape de réglage de pondération 13 est alors réalisée.

En appliquant le théorème de la valeur finale à un système tel qu'une chaîne de contrôle commande 1, le coefficient de pondération de consigne $\beta$ peut en être exprimé par la relation :

$$\beta = 1 - \varepsilon \times \frac{K_I}{K_P}$$

Dans le mode de réalisation décrit, le coefficient de pondération de consigne β est donc fonction du gain proportionnel $K_P$ et du gain intégral $K_I$, ainsi que de l'erreur du système ε.

Le gain proportionnel $K_P$ et le gain intégral $K_I$ étant fixés, il est donc possible de calibrer la valeur du coefficient de pondération de consigne β de manière à atteindre une valeur d'erreur ε correspondant aux critères du cahier des charges définissant les performances à atteindre pour la chaîne de contrôle commande 1.

Afin d'obtenir un comportement respectant les critères spécifiés par le cahier des charges, il est nécessaire de dimensionner le réglage du correcteur pour les cas de fonctionnement les plus défavorables.

Les cas de fonctionnement les plus défavorables sont rencontrés dans le cas où les consignes présentent le gradient le plus important.

Les limitations de gradient des consignes impliquent que les consignes les plus exigeantes auront la forme de rampes avec un gradient égal à celui du limiteur de gradient.

En conséquence, le type d'erreur qui sera utilisé pour dimensionner le correcteur sera une erreur de traînage, correspondant à l'erreur consécutive au modèle de consigne le plus exigeant (une rampe).

Préalablement à l'étape d'assignation de pondération 132, une étape de modélisation 131 peut être réalisée, au cours de laquelle le système asservi 3 est assimilé à un modèle théorique 3' représentant son fonctionnement.

Dans le mode de réalisation choisi, le modèle de système asservi 3' est un système parfait linéaire de deuxième ordre associé à un intégrateur, soumis à une consigne de type rampe de pente unitaire. Il peut par exemple comporter un actionneur de type servovalve-vérin.

La chaîne de commande 1 est donc modélisée par un modèle de chaîne de commande 1' comportant un modèle de correcteur 2' similaire au correcteur 2 et le modèle de système asservi 3'.

Au cours de l'étape de modélisation 131, le modèle de correcteur 2' présente les réglages établis lors des étapes d'assignation 11 et d'optimisation 12.

Le coefficient de pondération de consigne β est fixé à une valeur unitaire, les gains proportionnel $K_P$ et intégral $K_I$ sont fixés aux valeurs obtenues après l'étape d'optimisation 12.

Une erreur théorique $\varepsilon_{TH}$ du modèle de chaîne de commande 1' peut être déduite classiquement, qui sera ensuite utilisée afin de procéder au réglage du coefficient de consigne β.

L'erreur théorique $\varepsilon_{TH}$ peut également être une spécification du cahier des charges et être extraite directement du cahier des charges.

Il est cependant envisageable dans d'autre modes de réalisation d'appliquer une consigne en rampe à pente non unitaire.

Dans le mode de réalisation retenu d'une consigne en rampe, l'erreur théorique du modèle est donc une erreur de traînage caractéristique $\varepsilon_{TC}$.

Le coefficient de pondération de consigne β peut donc être défini au cours de l'étape d'assignation de pondération 132 pour une valeur exprimée selon la formule :

$$\beta = 1 - (\varepsilon_{TC}) \times \frac{K_I}{K_P}$$

La valeur ainsi exprimée sera assignée au pondérateur 7 de la chaîne de commande 1.

Sous l'effet du réglage de la valeur du coefficient de pondération de consigne β, la chaîne de commande 1 présentera une erreur de traînage $\varepsilon_T$ qui tendra vers la valeur de l'erreur de traînage caractéristique $\varepsilon_{TC}$.

Optionnellement, l'erreur théorique $\varepsilon_{TH}$ peut être associée à une marge de sécurité σ définie de manière à prendre en compte la non-linéarité du fonctionnement du système asservi 3. Il est nécessaire de prendre en compte ses imperfections dans la synthèse du correcteur 2. Le coefficient de pondération de consigne β est alors défini selon la formule :

$$\beta = 1 - (\varepsilon_{TH} + \sigma) \times \frac{K_I}{K_P}$$

Dans le mode de réalisation où le système asservi 3 est modélisé comme un système parfait linéaire du deuxième ordre avec un intégrateur soumis à une consigne en rampe, le coefficient de pondération de consigne β peut alors être défini par la relation :

$$\beta = 1 - (\varepsilon_{TC} + \sigma) \times \frac{K_I}{K_P}$$

La structure de ce mode de réalisation du correcteur 2 permet de modifier le coefficient de pondération de consigne β sans qu'il n'y ait d'effet sur les performances en matière de stabilité et de robustesse du correcteur 2.

Le réglage optimal du coefficient de pondération de consigne β permet d'optimiser le temps de réponse, le dépassement et l'erreur de traînage $\varepsilon_T$, plus précisément il permet de définir les performances attendues pour l'erreur de traînage $\varepsilon_T$ sans dégrader les performances en matière de temps de réponse et de dépassement préalablement obtenues par le réglage des gains proportionnel $K_P$ et intégral $K_I$.

Plus particulièrement, le dépassement est fortement contenu tout en conservant un temps de réponse similaire à un correcteur 2 sans pondérateur 7.

Dans ce mode de réalisation, le correcteur 2 conserve ses propriétés de stabilité et de robustesse avec ou sans pondérateur 7.

En évitant d'ajouter une composante dérivée, la sensibilité du système au bruit de mesure est fortement limitée.

La prise en compte de l'erreur théorique $\varepsilon_{TH}$ dans le réglage du correcteur 2 permet d'obtenir un compromis dépassement/erreur $\varepsilon$ optimal par rapport aux spécifications du cahier des charges.

Dans le mode de réalisation dans lequel le système asservi 3 est modélisée comme un système parfait linéaire du deuxième ordre avec un intégrateur soumis à une consigne en rampe, la prise en compte de l'erreur de traînage caractéristique $\varepsilon_{TC}$ dans le réglage du correcteur 2 permet d'obtenir un compromis dépassement/erreur de traînage $\varepsilon_T$ optimal par rapport aux spécifications du cahier des charges.

La méthode de réglage automatisée permet de limiter fortement la durée de l'opération, en plus de simplifier le processus.

La structure du régulateur est simple, ce qui limite ses coûts de développement et de maintenabilité.

Le procédé de réglage automatique du correcteur 2 est réalisé au moyen d'une unité ou module de réglage 14 comportant une ou plusieurs unités de mémoire 15, dans lesquelles sont stockées des consignes permettant l'exécution du procédé de réglage automatique.

Les consignes sont exécutées au moyen d'au moins un processeur 16, qui met en œuvre le procédé de réglage automatique du correcteur 2. Le processeur 16 et la mémoire 15 font typiquement partie du calculateur moteur, mais il est envisageable en alternative qu'ils soient intégrés dans un module spécifique physiquement séparé du calculateur moteur.

De manière similaire, si l'on dispose d'un réglage existant d'un correcteur PI avec pondération de la consigne pour un système à intégrateur alors il est possible de connaitre l'erreur de traînage que l'on aura, pour une consigne en rampe, grâce à la relation :

$$\varepsilon_T = \frac{K_p}{K_I}(1 - \beta)$$

Or la connaissance de la performance de l'asservissement et donc de l'erreur de traînage $\varepsilon_T$ est une donnée primordiale pour la conception des modes de repli de la turbomachine.

Lorsqu'une défaillance est détectée sur la machine, un repli doit être effectué rapidement pour préserver la machine en évitant de la maintenir trop longtemps dans un état dégradé.

A contrario une diminution trop rapide du régime des hélices par rapport à la puissance délivrée par le générateur de gaz est également dangereuse car elle risque d'engendrer des surcouples dans les arbres des hélices.

Connaitre par avance le profil des décélérations via la connaissance de l'erreur de traînage $\varepsilon_T$ permet donc d'optimiser la conception des hélices que ce soit du point de vue du pilotage (synchronisation entre les hélices et le générateur de gaz) ou de la conception mécanique puisque l'on peut connaitre par avance les couples qui seront présents dans les arbres des hélices lors des transitoires rapides.

## Revendications

1. Procédé de réglage d'un correcteur (2) de type proportionnel intégral dans un dispositif de contrôle commande (1) d'un système asservi (3), notamment d'un système servovalve-vérin, le correcteur (2) comportant un coefficient de pondération de consigne ($\beta$), un gain proportionnel ($K_p$) et un gain intégral ($K_i$),
le procédé de réglage comportant les étapes successives de :

   • Réglage (11) du coefficient de pondération de consigne ($\beta$) à une valeur unitaire,
   • Réglage (12) du gain proportionnel ($K_p$) et du gain intégral ($K_i$) du correcteur (2) répondant à au moins un critère de performance prédéfini,
   • Définition d'une erreur de trainage caractéristique ($\varepsilon_{TC}$) permettant de répondre aux contraintes de performances du système asservi (3), et
   • Réglage (132) du coefficient de pondération de consigne ($\beta$) à une valeur de coefficient de pondération de consigne ($\beta$) en fonction de l'erreur de traînage caractéristique ($\varepsilon_{TC}$) et du gain proportionnel ($K_p$) et du gain intégral ($K_i$) préalablement réglés.

2. Procédé de réglage selon la revendication 1, dans lequel l'étape de réglage (12) du gain proportionnel ($K_p$) et du gain intégral ($K_i$) du correcteur (2) comprenant en outre les étapes suivantes :

   • Détermination (121) et réglage des gains proportionnel ($K_P$) et intégral ($K_I$) à des valeurs initiales,
   • Ajustement (122) par itération des gains proportionnel ($K_P$) et intégral ($K_I$), de manière à optimiser au moins un critère de performance prédéfini.

3. Procédé de réglage selon la revendication 2, dans lequel l'étape de détermination (121) des valeurs initiales des gains proportionnel ($K_P$) et intégral ($K_I$) est réalisée par une méthode empirique de Ziegler-Nichols ou par une méthode empirique de Takahashi.

**4.** Procédé de réglage selon l'une des revendications 1 à 3, comprenant en outre une étape de détermination d'une marge de sécurité ($\sigma$), et dans lequel l'étape de réglage (132) du coefficient de pondération de consigne ($\beta$) est réalisée en fonction de l'erreur théorique ($\varepsilon_{TH}$) du dispositif de contrôle commande (1) et de la marge de sécurité ($\sigma$).

**5.** Procédé de réglage selon la revendication 4, dans lequel la marge de sécurité ($\sigma$) est déterminée en fonction de l'écart de comportement entre le système réel et son modèle linéarisé.

**6.** Procédé de réglage selon l'une des revendications 1 à 5, dans lequel le correcteur (2) ne comporte pas de composante dérivée.

**7.** Procédé de réglage selon l'une des revendications 1 à 6, le procédé étant réalisé de manière automatique au moyen d'un module de réglage (14) comportant une ou plusieurs unités de mémoire (15), dans lesquelles sont stockées des consignes permettant l'exécution du procédé de réglage automatique, les consignes étant exécutées au moyen d'au moins un processeur (16).

**8.** Dispositif de contrôle commande (1) d'un système asservi (3), notamment d'un système servovalve-vérin, le dispositif de contrôle commande (1) comportant une consigne (X) injectée dans un correcteur (2), le signal de sortie du correcteur (2) étant injecté dans le système asservi (3), le système asservi (3) produisant une réponse (Y), la réponse (Y) étant également injectée dans le correcteur (2), dans lequel le correcteur (2) est un correcteur de type proportionnel intégral comprenant un pondérateur (7) de consigne, le pondérateur (7) comportant un coefficient de pondération de consigne ($\beta$), le coefficient de pondération de consigne ($\beta$) du correcteur (2) étant réglé au moyen d'un procédé de réglage selon l'une des revendications 1 à 7.

**9.** Dispositif de commande (1) selon la revendication 8, dans lequel le correcteur (2) est configuré pour générer une commande (U) correspondant à la somme de :

• Une erreur intégrée et modifiée par un gain intégral ($K_I$),
• La différence entre une consigne pondérée (X') par le coefficient de pondération de consigne ($\beta$) et la réponse (Y) du système asservi (3), cette différence étant modifiée par un gain proportionnel ($K_P$),

dans lequel le gain intégral ($K_I$), le gain proportionnel ($K_P$) et le coefficient de pondération de consigne ($\beta$) sont des paramètres réglables du correcteur (2).

**Patentansprüche**

**1.** Verfahren zur Regelung eines Reglers (2) vom Typ proportional-integral in einer Überwachungs- und Steuervorrichtung (1) eines Servosystems (3), insbesondere eines Servoventil-Zylinder-Systems, wobei der Regler (2) einen Sollwertgewichtungskoeffizienten ($\beta$), eine Proportionalverstärkung ($K_P$) und eine Integralverstärkung ($K_i$) aufweist, wobei das Regelungsverfahren die folgenden aufeinanderfolgenden Schritte aufweist:

• Regelung (11) des Sollwertgewichtungskoeffizienten ($\beta$) auf einen Einheitswert,
• Regelung (12) der Proportionalverstärkung ($K_P$) und der Integralverstärkung ($K_i$) des Reglers (2) entsprechend mindestens einem vorher festgelegten Leistungskriterium,
• Definition eines charakteristischen Schleppfehlers ($\varepsilon_{TC}$), um auf Leistungseinschränkungen des Servosystems (3) antworten zu können, und
• Regelung (132) des Sollwertgewichtungskoeffizienten ($\beta$) auf einen Wert des Sollwertgewichtungskoeffizienten ($\beta$) in Abhängigkeit vom charakteristischen Schleppfehler ($\varepsilon_{TC}$) und der Proportionalverstärkung ($K_P$) und der Integralverstärkung ($K_i$), die zuvor geregelt wurden.

**2.** Regelungsverfahren nach Anspruch 1, wobei der Schritt der Regelung (12) der Proportionalverstärkung ($K_P$) und der Integralverstärkung ($K_i$) des Reglers (2) ferner die folgenden Schritte umfasst:

• Bestimmen (121) und Regelung der Proportionalverstärkung ($K_p$) und Integralverstärkung ($K_I$) auf Ausgangswerte,
• Anpassen (122) durch Iteration der Proportionalverstärkung ($K_p$) und Integralverstärkung ($K_I$) derart, dass mindestens ein vorher festgelegtes Leistungskriterium optimiert wird.

**3.** Regelungsverfahren nach Anspruch 2, wobei der Schritt des Bestimmens (121) der Ausgangswerte der Proportionalverstärkung ($K_p$) und Integralverstärkung ($K_I$) anhand einer empirischen Ziegler-Nichols-Methode oder anhand einer empirischen Takahashi-Methode durchgeführt wird.

**4.** Regelungsverfahren nach einem der Ansprüche 1 bis 3, umfassend ferner einen Schritt des Bestimmens einer Sicherheitsmarge ($\sigma$), und wobei der Schritt der Regelung (132) des Sollwertgewichtungskoeffizienten ($\beta$) in Abhängigkeit vom theoretischen Fehler ($\varepsilon_{TH}$) der Überwachungs- und Steuervorrichtung (1) und der Sicherheitsmarge ($\sigma$) durchgeführt wird.

**5.** Regelungsverfahren nach Anspruch 4, wobei die Si-

cherheitsmarge ($\sigma$) in Abhängigkeit von der Abweichung des Verhaltens zwischen dem realen System und seinem linearisierten Modell bestimmt wird.

**6.** Regelungsverfahren nach einem der Ansprüche 1 bis 5, wobei der Regler (2) keine abgeleitete Komponente aufweist.

**7.** Regelungsverfahren nach einem der Ansprüche 1 bis 6, wobei das Verfahren mittels eines Regelungsmoduls (14) automatisch durchgeführt wird, das eine oder mehrere Speichereinheiten (15) aufweist, in denen Sollwerte gespeichert sind, die die Ausführung des automatischen Regelungsverfahrens gestatten, wobei die Sollwerte mittels mindestens eines Prozessors (16) ausgeführt werden.

**8.** Überwachungs- und Steuervorrichtung (1) eines Servosystems (3), insbesondere eines Servoventil-Zylinder-Systems, wobei die Überwachungs- und Steuervorrichtung (1) einen in einen Regler (2) eingegebenen Sollwert (X) aufweist, wobei das Ausgangssignal des Reglers (2) in das Servosystem (3) eingegeben wird, wobei das Servosystems (3) eine Antwort (Y) produziert, wobei die Antwort (Y) ebenfalls in den Regler (2) eingegeben wird, wobei der Regler (2) ein Regler vom Typ proportional-integral ist, der einen Sollwertgewichter (7) umfasst, wobei der Gewichter (7) einen Sollwertgewichtungskoeffizienten ($\beta$) aufweist, wobei der Sollwertgewichtungskoeffizient ($\beta$) des Reglers (2) mittels eines Regelungsverfahrens nach einem der Ansprüche 1 bis 7 geregelt wird.

**9.** Steuervorrichtung (1) nach Anspruch 8, wobei der Regler (2) ausgelegt ist, um eine Steuerung (U) zu erzeugen, die der Summe entspricht:

    • eines von einer Integralverstärkung ($K_I$) integrierten und geänderten Fehlers,
    • der Differenz zwischen einem von dem Sollwertgewichtungskoeffizienten ($\beta$) gewichteten Sollwert (X') und der Antwort (Y) des Servosystems (3), wobei diese Differenz von einer Proportionalverstärkung ($K_p$) geändert wird,

wobei die Integralverstärkung ($K_I$) die Proportionalverstärkung ($K_p$) und der Sollwertgewichtungskoeffizient ($\beta$) regelbare Parameter des Reglers (2) sind.

**Claims**

**1.** Method for adjusting a proportional-integral type corrector (2) in a control device (1) of a servo system (3), in particular of a servo valve-cylinder system, the corrector (2) comprising a setpoint weighting coefficient ($\beta$), a proportional gain ($K_p$) and an integral

gain ($K_i$),
the adjustment method comprising the successive steps of:

    • Setting (11) of the setpoint weighting coefficient ($\beta$) to a unit value,
    • Adjustment (12) of the proportional gain ($K_p$) and the integral gain ($K_i$) of the corrector (2) meeting at least one predefined performance criterion,
    • Definition of a characteristic drag error ($\varepsilon_{TC}$) permitting to meet the performance constraints of the servo system (3), and
    • Setting (132) the setpoint weighting coefficient ($\beta$) to a setpoint weighting coefficient value ($\beta$) depending on the characteristic drag error ($\varepsilon_{TC}$) and the proportional gain ($K_p$) and the integral gain ($K_i$) previously set.

**2.** The adjustment method according to claim 1, wherein the step of adjusting (12) the proportional gain ($K_p$) and the integral gain ($K_i$) of the corrector (2) further comprises the following steps:

    • Determination (121) and adjustment of proportional ($K_P$) and integral ($K_I$) gains at initial values,
    • Adjustment (122) by iteration of the proportional ($K_P$) and integral ($K_I$) gains, so as to optimise at least one predefined performance criterion.

**3.** The tuning method according to claim 2, wherein the step of determining (121) the initial values of the proportional ($K_P$) and integral ($K_I$) gains is performed by an empirical Ziegler-Nichols method or by an empirical Takahashi method.

**4.** The setting method according to any of claims 1 to 3, further comprising a step of determining a safety margin ($\sigma$), and wherein the step of setting (132) the setpoint weighting coefficient ($\beta$) is performed as a function of the theoretical error ($\varepsilon_{TH}$) of the control command device (1) and the safety margin ($\sigma$).

**5.** The control method according to claim 4, wherein the safety margin ($\sigma$) is determined as a function of the behavioural deviation between the actual system and its linearised model.

**6.** A method of adjustment according to any of claims 1 to 5, wherein the corrector (2) does not comprise a derivative component.

**7.** The setting method according to any of claims 1 to 6, wherein the method is carried out automatically by means of a setting module (14) with one or more memory units (15), in which setpoints for carrying out the automatic setting method are stored, wherein the setpoints are executed by means of at least one processor (16).

8. A control device (1) for controlling a servo system (3), in particular a servo valve-cylinder system, the control device (1) comprising a setpoint (X) injected into a corrector (2), the output signal of the corrector (2) being injected into the servo system (3), the servo system (3) producing a response (Y), the response (Y) also being injected into the corrector (2), wherein the controller (2) is a proportional-integral type controller comprising a setpoint weight (7), the weight (7) having a setpoint weighting coefficient ($\beta$), the setpoint weighting coefficient ($\beta$) of the controller (2) being adjusted by means of an adjustment method according to one of the claims 1 to 7.

9. The control device (1) according to claim 8, wherein the corrector (2) is configured to generate a command (U) corresponding to the sum of:

   • An integrated error modified by an integral gain ($K_I$),
   • The difference between a setpoint weighted (X') by the setpoint weighting coefficient ($\beta$) and the response (Y) of the controlled system (3), this difference being modified by a proportional gain ($K_P$),

where the integral gain ($K_I$), the proportional gain ($K_P$) and the setpoint weighting coefficient ($\beta$) are adjustable parameters of the corrector (2).

EP 3 729 206 B1

**FIG. 1**

## FIG. 2

```
┌──────────┐        ┌ ─ ─ ─ ─ ─ ─ ─ 12 ─ ─ ─ ─ ─ ─ ┐    ┌ ─ ─ ─ ─ ─ ─ ─ 13 ─ ─ ─ ─ ─ ─ ┐
│┌────────┐│        │ ┌──────┐   ┌──────┐ │            │ ┌──────┐   ┌──────┐ │
││   11   ││───────▶│ │  121 │──▶│  122 │ │──────────▶ │ │  131 │──▶│  132 │ │──────────▶
│└────────┘│        │ └──────┘   └──────┘ │            │ └──────┘   └──────┘ │
└──────────┘        └ ─ ─ ─ ─ ─ ─ ─ ─ ─ ─ ─ ─ ─ ─ ┘    └ ─ ─ ─ ─ ─ ─ ─ ─ ─ ─ ─ ─ ─ ─ ┘
```

## FIG. 3

```
 Kp
───────▶  ┌ ─ ─ ─ ─ ─ ─ 14 ─ ─ ─ ─ ─ ─ ┐
 KL       │                             │
───────▶  │  ┌──────┐    ┌──────┐       │      β
 εTH      │  │  15  │    │  16  │       │────────▶
───────▶  │  └──────┘    └──────┘       │
 σ        │                             │
───────▶  └ ─ ─ ─ ─ ─ ─ ─ ─ ─ ─ ─ ─ ─ ─ ┘
```

**RÉFÉRENCES CITÉES DANS LA DESCRIPTION**

**Documents brevets cités dans la description**

- DE 3506097 A1